# FASCICULE DE BREVET EUROPEEN

(11) **EP 2 691 274 B1**
(45) Date de publication et mention de la délivrance du brevet: **12.04.2017**
(21) Numéro de dépôt: 12711157.3
(22) Date de dépôt: 26.03.2012
(51) Int. Cl.: B60S 1/52, B60S 1/38

(54) **PARTIE PRIMAIRE ET PARTIE SECONDAIRE D'UN EMBOUT D'EXTREMITE POUR BALAI D'ESSUYAGE**
ERSTES UND ZWEITES TEIL EINES ENDSTÜCKES FÜR EINEN SCHEIBENWISCHER
FIRST PART AND SECOND PART OF AN END PIECE FOR A WINDSHIELD WIPER

(30) Priorité: 31.03.2011 FR 1152718
(43) Date de publication de la demande: 05.02.2014
(73) Titulaire: Valeo Systèmes d'Essuyage, 78322 Le Mesnil Saint Denis (FR)
(72) Inventeur: ESPINASSE, Philippe, F-63114 Coudes (FR)
(74) Mandataire: Léveillé, Christophe
(86) Numéro de dépôt international: PCT/EP2012/055325
(87) Numéro de publication internationale: WO 2012/130800

(56) Documents cités:
- FR-A1- 2 920 729
- FR-A1- 2 929 904

## Description

Le domaine de la présente invention est celui des équipements pour l'essuyage des vitrages, notamment d'une automobile.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur. Dans les deux solutions, le balai est rattaché au bras tournant de l'essuie-glace par un connecteur.

Dans le cas où la qualité de l'essuyage se dégrade, il devient alors nécessaire de renouveler le moyen d'essuyage. Il existe deux solutions : la première consiste en un remplacement de l'intégralité du balai par un balai neuf alors que la deuxième solution consiste en un remplacement de la lame racleuse tout en conservant le reste du balai.

L'invention concerne plus particulièrement cette seconde solution qui impose le démontage d'une extrémité du balai pour accéder à la lame racleuse.

Pour réaliser la fixation de la lame racleuse avec le support constitutif du balai, ce dernier comporte un embout qui est monté à une extrémité de ce support et qui comporte des moyens pour assurer sa solidarisation vis-à-vis du support. Le document FR 2 920 729 divulgue un tel embout.

Par ailleurs, les essuie-glaces sont également équipés de dispositifs d'amenée d'un liquide lave-vitre qui est acheminé depuis un réservoir situé sur le véhicule et qui est pulvérisé en direction du pare-brise par des buses situées soit autour du pare-brise, soit sur l'essuie-glace lui-même pour une meilleure distribution du liquide.

L'inconvénient de cette seconde situation, dans le cas où seule la lame racleuse est remplacée, réside dans le fait que le dispositif d'amenée de liquide se trouve ouvert et provoque ainsi une fuite. Par ailleurs, l'ouverture du dispositif d'amenée de liquide pendant la phase de remplacement de la lame génère un risque de voir des impuretés entrer dans le dispositif. Une telle situation est problématique car ces impuretés obstruent les buses, dégradant ainsi nettement l'efficacité du lavage de pare-brise.

Un autre inconvénient d'une telle situation réside dans la difficulté de remplacer une telle lame racleuse. En effet, il convient de disposer de solution la plus ergonomique possible pour remplacer la lame et on comprend que la présence d'un liquide au niveau de zone de manipulation complique le remplacement de la lame et le bon remontage de celle-ci. Par ailleurs, la pression résiduelle à l'intérieur du dispositif d'amenée de liquide peut provoquer des projections de liquide sur l'utilisateur qu'il convient d'éviter.

Le but de la présente invention est donc de résoudre les inconvénients décrits ci-dessus principalement en obstruant le dispositif d'amenée de liquide tout en autorisant un démontage aisé de la lame racleuse par rapport au support du balai d'essuyage. Un tel but est atteint par la partie primaire selon l'invention, la partie secondaire selon l'invention et la combinaison de ces deux parties.

L'invention a donc pour objet un embout d'extrémité de balai d'essuyage selon la revendication 1.

Selon l'invention, la partie primaire comprend au moins un moyen d'obturation apte à boucher un dispositif de canalisation d'un liquide constitutif du balai.

Selon une caractéristique additionnelle de l'invention, le secteur tubulaire s'étend selon une direction primaire parallèle à l'axe longitudinal.

Avantageusement, le secteur tubulaire présente une section cylindrique.

Selon une autre caractéristique de l'invention, la partie primaire comprend un corps dans lequel est ménagé l'évidement, ladite partie primaire présentant une lumière entre le corps et le secteur tubulaire.

Selon encore une caractéristique de l'invention, l'évidement est bordé par un dispositif d'accrochage primaire apte à prendre appui contre la lame.

L'objet de l'invention porte également sur une partie secondaire d'un embout d'extrémité pour balai d'essuyage comportant au moins une lame d'essuyage, la partie secondaire comprenant un moyen de verrouillage apte à bloquer la lame par rapport à une partie primaire constitutive de l'embout, ladite partie secondaire comprend en outre un moyen de fixation apte à relier mécaniquement la partie secondaire à une zone de la partie primaire, dans lequel le moyen de fixation est au moins une portion tubulaire creuse dont la périphérie comporte une fente.

Selon une caractéristique additionnelle de l'invention, la portion tubulaire creuse s'étend selon une direction secondaire alors que la fente est rectiligne le long de la portion tubulaire creuse.

De manière avantageuse, on prévoit une paroi qui prend naissance au moins sur la portion tubulaire creuse.

Avantageusement, le moyen de verrouillage est formé par un doigt agencé pour traverser la lame.

De manière alternative ou complémentaire, le moyen de verrouillage est formé par un dispositif d'accrochage secondaire apte à prendre appui contre la lame.

La paroi relie deux portions tubulaires creuses délimitant ainsi un volume interne, le moyen de verrouillage étant formé par une excroissance qui s'étend dans ledit volume interne.

De manière avantageuse, la partie secondaire de l'embout comprend une paroi qui prend naissance sur au moins une portion tubulaire creuse et forme un premier profil, la partie primaire comprend un flan qui définit une périphérie externe de la partie primaire et forme un second profil, et dans lequel le premier profil est au moins partiellement identique au second profil. On entend par « profil identique » le fait que le contour extérieur de la partie secondaire s'inscrit dans le contour extérieur de la partie primaire, de sorte à ne pas dépasser de cette dernière une fois assemblé. L'esthétisme du balai qui reçoit un tel embout est ainsi amélioré.

L'invention couvre enfin un balai d'essuyage comprenant au moins une lame d'essuyage et un embout d'extrémité tel que décrit ci-dessus, le balai d'essuyage comprenant au moins un dispositif de canalisation d'un liquide et une vertèbre.

Un tout premier avantage selon l'invention réside dans le fait que la partie secondaire peut-être extraite de la partie primaire sans la présence de liquide susceptible de compliquer cette extraction. Une telle extraction autorise alors un remplacement de la lame effectué en milieu sec, ce qui évite toute projection de liquide sur l'utilisateur au moment du montage et du démontage de la lame. Comme la partie primaire reste sur le balai d'essuyage, le dispositif d'amenée de liquide lave-vitre n'est pas ouvert, ce qui par conséquent empêche l'introduction d'impuretés dans les canalisations.

Un autre avantage réside dans le fait qu'un remplacement de la lame est particulièrement simple à effectuer puisqu'une seule et unique opération suffit pour libérer ou bloquer la lame racleuse par rapport au reste du balai. Une telle opération ne nécessite pas l'appui préalable sur un bouton, ou l'extraction d'une pièce intermédiaire, par exemple.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'une première variante d'un embout d'extrémité selon l'invention installé à l'extrémité d'un balai d'essuyage,
- la figure 2 est une vue en perspective qui montre en détails un premier mode de réalisation de la partie primaire selon l'invention,
- la figure 3 est une vue de dessus de la partie primaire illustrée sur la figure 2,
- la figure 4 est une vue en perspective et de dessus d'un premier mode de réalisation de la partie secondaire selon l'invention,
- la figure 5 est une vue en perspective et de dessous de la partie secondaire de la figure 4,
- la figure 6 est une vue de côté de la partie secondaire illustrée en figures 4 et 5,
- la figure 7 est une vue en coupe transversale de l'embout d'extrémité selon la première variante tel qu'installé sur un balai d'essuyage,
- la figure 8 est une vue en perspective d'une deuxième variante d'un embout selon l'invention installé à l'extrémité d'un balai d'essuyage,
- les figures 9 et 10 montrent un mode de réalisation de la partie primaire selon la deuxième variante de l'embout d'extrémité,
- les figures 11 et 12 montrent un mode de réalisation de la partie secondaire selon la deuxième variante de l'embout d'extrémité,
- la figure 13 est une vue en coupe transversale de l'embout d'extrémité tel qu'illustré à la figure 8,
- la figure 14 montre une partie primaire employée pour réaliser une troisième variante de l'embout d'extrémité,
- la figure 15 illustre la partie secondaire employée pour réaliser la troisième variante de l'embout d'extrémité,
- enfin, la figure 16 montre, vue du dessous de l'embout, la collaboration entre la partie primaire, la partie secondaire et la lame.

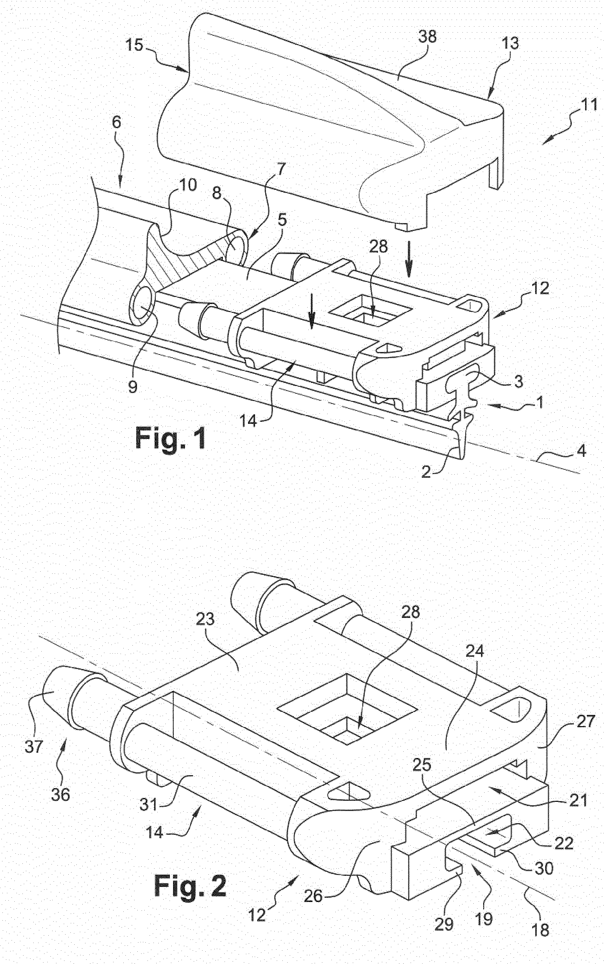

La figure 1 montre de manière partielle un balai d'essuyage équipant un système d'essuyage monté sur un véhicule automobile. Ce balai est installé sur le pare-brise avant mais il peut également être monté sur la vitre arrière du véhicule.

Le balai comprend une lame d'essuyage 1, autrement appelé lame racleuse, constituée d'une zone de frottement 2 sur le vitrage et d'un talon 3, qui assure la liaison mécanique avec un support constitutif du balai. Cette lame d'essuyage 1 s'étend sur la longueur selon un premier axe 4.

Le balai comprend par ailleurs une vertèbre 5 qui forme un dispositif de rigidification du balai. A titre d'exemple, il s'agit d'une baguette métallique unique qui s'étend selon le premier axe 4 et qui présente au repos une courbure convexe par rapport au pare-brise. Cette baguette présente une flexibilité déterminée, qui en se déformant quand le balai est appliqué sur le pare-brise, provoque un effort réparti sur le long de la lame d'essuyage 1.

La lame 1 et la vertèbre 5 sont retenues par le support 6 qui forme alors une monture de support longitudinal couvrant la vertèbre 5 et la lame d'essuyage 1.

Le balai d'essuyage est pourvu d'un dispositif de canalisation d'un liquide 7 qui est rendu solidaire du support 6, par exemple par clippage, collage ou plus généralement par coopération de formes. Le dispositif de canalisation de liquide 7 peut également être réalisé de manière unitaire avec le support 6, comme cela est le cas de la figure 1. Le dispositif de canalisation du liquide 7 se présente notamment sous la forme d'au moins deux conduits 8 et 9 qui s'étendent longitudinalement le long du balai selon un axe par exemple parallèle au premier axe 4, et de part et d'autre de la lame d'essuyage 1. Plus précisément, ces conduits 8 et 9 sont disposés sur les côtés du support 6 et dans le prolongement du plan dans lequel s'étend le support 6. Ce dispositif de canalisation de liquide 7 est fabriqué à partir d'un matériau flexible, par exemple un caoutchouc ou un élastomère.

Le dispositif de canalisation du liquide 7 peut être formé conjointement avec un déflecteur d'air 10 dont la fonction est d'augmenter la force d'appui du balai sur le pare-brise au bénéfice de l'effet aérodynamique de l'air. Dans cet exemple de réalisation, le déflecteur d'air 10 et le dispositif de canalisation de liquide 7, particulièrement les deux conduits 8 et 9, sont moulés à partir d'un même matériau flexible tel qu'un caoutchouc ou un élastomère. Le déflecteur d'air 10 et le dispositif de canalisation de liquide 7 forment ainsi une seule et unique pièce.

A l'extrémité du balai est installé un embout d'extrémité 11. D'une manière générale, cet embout d'extrémité 11 assure une multiplicité de fonctions :
- il obstrue le dispositif de canalisation de liquide 7 du balai d'essuyage,
- il autorise le montage et le démontage de la lame d'essuyage 1 par rapport au support 6,
- il assure la solidarisation de la lame d'essuyage 1 vis-à-vis du support 6. Par solidarisation, il faut ici comprendre un moyen de bloquer la translation de la lame d'essuyage 1 au regard du support 6. Ainsi, une fois que l'embout d'extrémité 11 est en place, tout mouvement de translation de la lame d'essuyage 1 est interdit, ce qui garantit une parfaite fixation de cette dernière par rapport au reste du balai.

L'embout d'extrémité 11 comprend une partie primaire 12 et une partie secondaire 13 reliées mécaniquement l'une à l'autre de manière amovible. La partie secondaire 13 présente une section extérieure globalement complémentaire à la section extérieure du support 6, du dispositif de canalisation 7 et du déflecteur 10. Ainsi, ces trois composants pénètrent dans un volume interne 15 pratiqué dans la partie secondaire 13.

La partie primaire 12 présente une fonction de retenue de la lame d'essuyage 1, une fonction de retenue de la vertèbre 5 et une fonction d'obturation du dispositif de canalisation de liquide 7 alors que la partie secondaire 13 assure le bon positionnement selon le premier axe 4 de la lame d'essuyage 1 et de la vertèbre 5.

La figure 2 montre la partie primaire 12 comprenant un logement 21 apte à recevoir la vertèbre et un évidement 22 apte à recevoir la lame d'essuyage, cet évidement 22 s'étendant selon un axe longitudinal 18 parallèle au premier axe 4 selon lequel s'étend la lame d'essuyage 1.

Le logement 21 est formé dans un corps 23 constitutif de la partie primaire 12. Ce logement 21 correspond à un enlèvement de matière de forme rectangulaire et qui s'étend selon le premier axe 4. La forme de ce logement 21 est complémentaire d'une section transversale de la vertèbre. Ce logement 21 est ainsi délimité d'un côté par une paroi supérieure 24 constitutive du corps 23, et de l'autre par une paroi intermédiaire 25. Latéralement, ce logement 21 est bordé par deux flancs référencés 26 et 27.

L'évidement 22 reçoit le talon de la lame d'essuyage. Cet évidement 22 s'étend longitudinalement dans le corps 23 à l'opposé du logement 21 par rapport à la paroi intermédiaire 25. On comprend que celle-ci délimite à la fois le logement 21 et l'évidement 22. Le corps 23 comprend encore une saignée 19 alignée avec l'évidement 22 et qui ouvre ce dernier vers le milieu environnant la partie primaire 12. Une telle saignée 19, de largeur inférieure à la largeur de l'évidement 22 mesuré selon un axe transversal perpendiculaire à l'axe longitudinal 4, autorise le passage d'une portion du talon. Cette saignée 19 est bordée par une première tranche 29 et une seconde tranche 30, ces dernières servant de coulisseau pour l'extraction ou l'insertion de la lame d'essuyage.

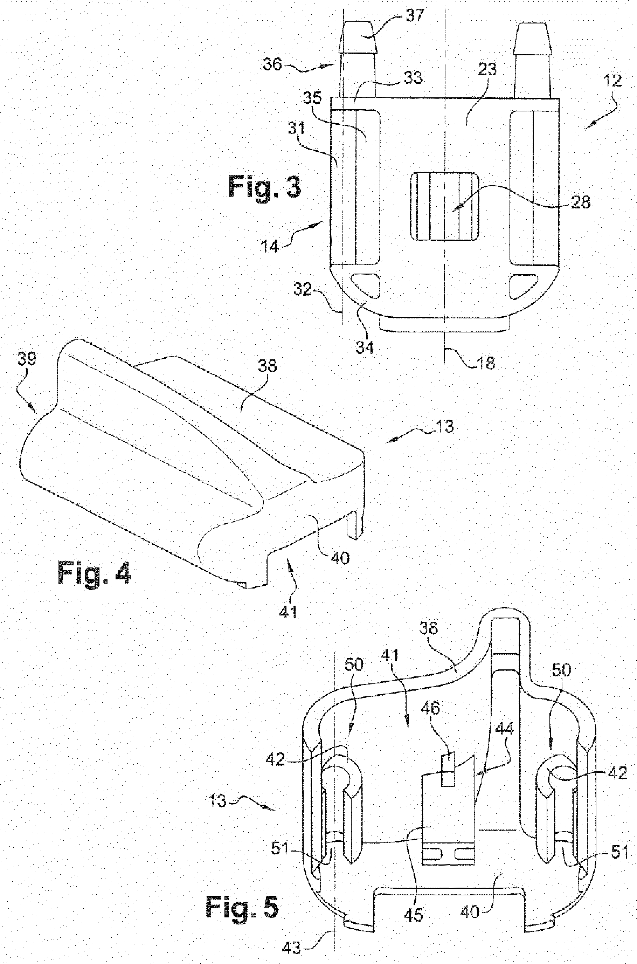

Les figures 2 et 3 montrent la partie primaire 12 comprenant un trou 28 qui débouche dans le logement 21 et dans l'évidement 22. En pratique, le trou 28 travers la paroi intermédiaire 25 et met ainsi en relation le volume délimité par le logement 21 et le volume délimité par l'évidement 22. En dehors de ce trou 28 qui s'étend dans un axe orthogonal à la paroi supérieur 24, le logement 21 est distinct ou séparé de l'évidement 22.

La section de ce trou 28 réalisé dans la paroi supérieure 24 et dans la paroi intermédiaire 25 est équivalente la section d'un moyen de verrouillage qui sera apparent aux figures 4 à 7.

Les figures 2 et 3 montrent également la présence d'une zone 14 ménagée latéralement par rapport à l'axe longitudinal 18 selon lequel s'étend l'évidement 22. L'axe longitudinal 18 forme un axe de symétrie qui coupe virtuellement la partie primaire 12 en deux portions de structure identique. Une telle zone 14 est apte à recevoir la partie secondaire 13 de l'embout d'extrémité 11. On comprend ainsi que la fonction de cette zone 14 ménagée sur le côté de la partie primaire 12 a pour fonction d'assurer la fixation de la partie secondaire 13.

La constitution de la zone 14 va maintenant être détaillée, étant entendu que la partie primaire comporte deux zones 14 distinctes de part et d'autre du corps 23 par rapport à l'axe longitudinal 18. La description ci-dessous s'attache à une première de ces zones mais on comprend que cette description est applicable à la seconde.

Sur la partie primaire 12, cette zone 14 comprend un secteur tubulaire 31 qui s'étend selon une direction primaire qui s'inscrit dans un plan parallèle au plan de la paroi supérieure 24. De manière plus précise, cette direction primaire du secteur tubulaire 31, qui porte la référence 32, est parallèle à l'axe longitudinal 18.

Le secteur tubulaire 31 est rectiligne et comporte une section cylindrique, notamment circulaire, selon une coupe orthogonale à la direction primaire 32. Il est par exemple formé par un tube plein ou creux présentant une paroi périphérique qui s'étend périphériquement à 360° autour de la direction primaire 32, quand celle-ci est placée au centre du tube.

Le secteur tubulaire 31 est localisé à la périphérie du corps 23. Ce secteur tubulaire 31 est ménagé latéralement par rapport au logement 21, c'est-à-dire sur le côté du corps 23 et dans le prolongement de ce logement 21 selon un plan parallèle au plan de la paroi supérieure 24.

Le secteur tubulaire 31 est relié au corps 23 par au moins deux bras respectivement référencés 33 et 34 et ménagés à chaque extrémité du corps 23, selon l'axe longitudinal 18. Une telle disposition permet de ménager une lumière 35 entre le corps 23 et le secteur tubulaire 31, une telle lumière 35 permettant de recevoir un moyen de fixation constitutif de la partie secondaire, comme cela sera détaillé plus bas.

Un exemple de réalisation d'un moyen d'obturation 36 est représenté sur ces figures. Ce moyen d'obturation 36 a pour fonction de boucher, ou fermer, le dispositif de canalisation du fluide du balai d'essuyage. Pour ce faire, la partie primaire 12 comprend un téton 37 agencé pour faire face au conduit 8 ou 9. Ce téton est une excroissance tubulaire qui s'étend selon un axe parallèle à l'axe longitudinal 18 et confondu avec un axe dans lequel s'étend le conduit concerné. Le diamètre extérieur de ce téton 37 est légèrement supérieur au diamètre intérieur du conduit respectif. Comme le matériau constitutif des conduits est flexible, ce dernier se déforme pour s'emmancher sur le téton 37 et ainsi garantir une étanchéité au liquide. On notera enfin que l'extrémité libre du téton 37 présente un chanfrein qui facilite l'introduction du téton dans le conduit.

Le moyen d'obturation 36 peut prendre d'autres formes de réalisation pour autant qu'il assure l'étanchéité du dispositif de canalisation du liquide aux extrémités du balai. A titre d'exemple, le dispositif d'obturation peut être formé par un appui plan du bout des conduites 8 ou 9 directement contre un flanc du corps 23.

La description ci-dessus de la partie primaire 12 évoque des caractéristiques sur un côté de cette partie primaire mais il va de soi que le côté opposée reçoit des caractéristiques identiques. Autrement dit, la partie primaire 12 comprend un moyen d'obturation 36 qui comporte deux tétons 37 et deux secteurs tubulaires 31 chacun séparé du corps 23 par une lumière 35.

Les figures 4 à 6 montrent la partie secondaire 13 utilisée dans la première variante de l'embout d'extrémité. Une telle partie secondaire 13 forme un capuchon qui, lorsque le balai d'essuyage est placé dans un plan horizontal, recouvre la partie primaire. Autrement dit, cette partie secondaire 13 est placée au dessus et dans le prolongement de la partie primaire et présente une paroi périphérique 38 de forme conjuguée, autrement dit complémentaire, à la forme du support, y compris le moyen de canalisation de liquide et/ou le déflecteur.

La partie secondaire 13 comprend au moins un moyen de fixation 50 apte à relier mécaniquement la partie secondaire 13 à la zone 14 de la partie primaire 12, telle que détaillée aux figures 2 et 3. Cette liaison devant être démontable, le moyen de fixation est agencé pour être amovible vis-à-vis de la partie primaire. Dans cette première variante de réalisation de l'embout d'extrémité, la partie secondaire 13 comprend deux moyens de fixation 50 distincts et séparés.

La paroi périphérique 38 prend naissance sur chaque moyen de liaison 50 ménagé sur la partie secondaire 13. Cette paroi périphérique 38 comprend en outre une extrémité ouverte 39 dans laquelle s'étend le support du balai d'essuyage quand l'embout d'extrémité y est assemblé, et présente par ailleurs une paroi de bout 40 opposée à l'extrémité ouverte 39. Une telle organisation délimite un volume interne 41. On notera que la paroi de bout 40 présente une découpe qui coopère avec l'extrémité de la partie primaire.

Le moyen de fixation 50 est réalisé par coopérations de formes ménagées à la fois sur la partie primaire et sur la partie secondaire.

En ce qui concerne la partie secondaire 13, ce moyen de fixation 50 est formé par au moins une portion tubulaire creuse 42 qui s'étend selon une direction secondaire 43. Cette portion tubulaire creuse 42 prend par exemple la forme d'un arc de cercle. La portion tubulaire creuse 42 est ouverte sur sa longueur et évidée en son centre de sorte à autoriser un positionnement du secteur tubulaire de la partie primaire à l'intérieur de la portion tubulaire creuse 42. Cette dernière est ainsi formée par un tube creux d'axe central confondu avec la direction secondaire 43 et avec la direction primaire 32, quand la partie secondaire 13 est fixée sur la partie primaire 12. Le diamètre intérieur de la portion tubulaire creuse 42 est identique, aux tolérances de fabrication près, au diamètre externe du secteur tubulaire ménagée sur la partie primaire.

La portion tubulaire creuse 42 est ouverte en ce sens qu'elle présente une fente 51 qui s'étend dans la longueur selon une direction parallèle à la direction secondaire 43. Autrement dit, la portion tubulaire creuse 42 est formée par un arc de cercle qui s'étend périphériquement entre 181° et 270°. Une telle fente 51 est rectiligne le long de la portion tubulaire creuse 42 et sa largeur est, notamment, constante. De telles dispositions donnent une flexibilité à la portion tubulaire creuse 42 afin d'autoriser l'introduction du secteur tubulaire de la partie primaire. Une fixation fiable mais amovible est ainsi réalisée entre la partie primaire et la partie secondaire 13.

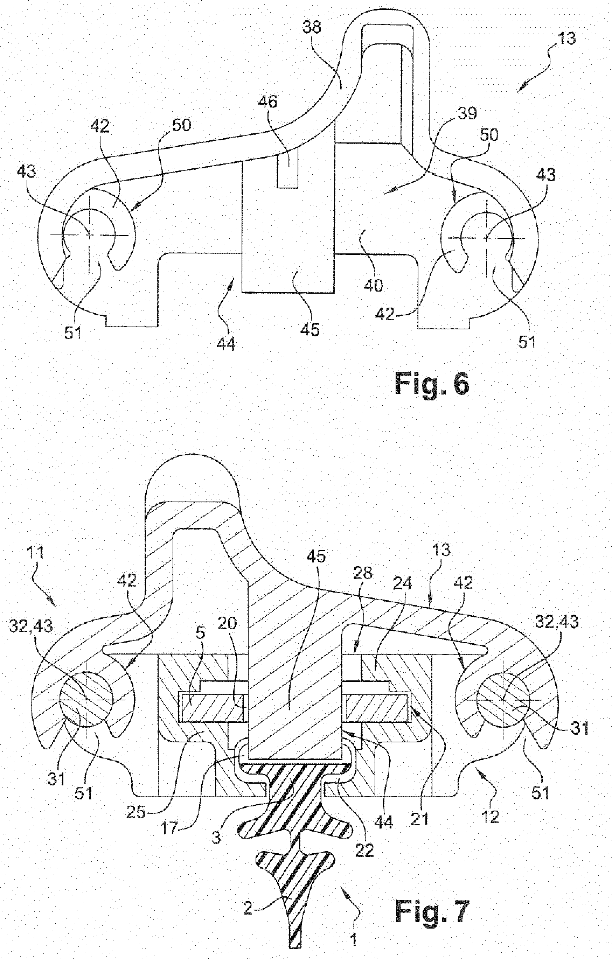

Un moyen de verrouillage 44 est également visible sur les figures 5 et 6. Ce moyen de verrouillage 44 a pour fonction de bloquer l'embout d'extrémité par rapport au balai d'essuyage, particulièrement pour empêcher tous mouvements selon le premier axe 4, ci-après dénommés mouvements de translation. Le moyen de verrouillage 44 est également le dispositif qui assure, simultanément à la fixation entre la partie primaire et la partie secondaire, le blocage en translation de la lame d'essuyage.

Dans la première variante de réalisation de l'embout d'extrémité, le moyen de verrouillage 44 est ménagé sur la partie secondaire 13 de manière à interdire les mouvements de translation entre la partie primaire et la vertèbre du balai.

Le moyen de verrouillage 44 est issu de matière avec la partie secondaire 13. Autrement dit, la partie secondaire 13 et le moyen de verrouillage 44 sont issus d'un même moule et fabriqués à partir d'une matière plastique.

A titre d'exemple et selon la première variante, le moyen de verrouillage 44 prend la forme d'une excroissance 45 qui s'étend dans le volume interne 41 de la partie secondaire 13, notamment selon une direction perpendiculaire à un plan qui passe par la direction secondaire 43 des deux portions tubulaires creuses 42 réalisées sur la partie secondaire 13.

Une telle excroissance 45 présente une section en « H » quand elle est coupée dans le plan définit ci-dessus. Des nervures de renforts 46 sont ménagées à la base de l'excroissance, c'est-à-dire à sa naissance par rapport à la paroi périphérique 38, de manière à renforcer mécaniquement la liaison entre la paroi périphérique 38 et l'excroissance 45.

La figure 7 montre la combinaison de la partie primaire 12 avec la partie secondaire 13 pour constituer la première variante de l'embout d'extrémité 11 qui bloque à la fois la vertèbre 5 et la lame d'essuyage 1.

Le talon 3 est délimité par une face supérieure et on constate que cette face supérieure présente une découpe 17 qui s'étend sur toute la largeur du talon 3 et sur une longueur déterminée, cette largeur étant déterminée par une direction perpendiculaire au premier axe 4 illustré sur la figure 1. Une telle découpe 17 coopère avec le moyen de verrouillage 44 constitutif de l'embout d'extrémité 11. La découpe 17 forme des bords latéraux contre lesquels le moyen de verrouillage 44 bute, ce qui permet d'interdire un mouvement de translation entre l'embout d'extrémité 11 et la lame d'essuyage 1.

L'extrémité de la vertèbre 5 est également adaptée pour recevoir l'embout d'extrémité 11. Cette extrémité de vertèbre comprend un orifice 20 traversant de part en part la vertèbre 5. Un tel orifice 20 est réalisé au centre de la vertèbre 5 selon un axe transversal perpendiculaire au premier axe 4.

Sur la figure 7, la coupe est réalisée dans un plan orthogonal au premier axe 4 et passant par le moyen de verrouillage 44.

La coopération entre le secteur tubulaire 31 de la partie primaire 12 dans la portion tubulaire creuse 42 issue de la partie secondaire 13 est particulièrement visible.

La fente 51 de la portion tubulaire creuse 42 est réalisée dans le quart inférieur de cette portion cylindrique, c'est-à-dire le quart opposé à la paroi périphérique 38 de la partie secondaire 13.

Le trou 28 ménagé dans la partie primaire est également apparent et on voit clairement que celui-ci débute au niveau de la paroi supérieure 24, se poursuit dans le logement 21 qui reçoit la vertèbre 5, traverse la paroi intermédiaire 25 et se termine dans l'évidement 22 dans lequel se loge la lame d'essuyage 1.

Le moyen de verrouillage 44 est installé dans le trou 28 et vient au contact de l'orifice 20 réalisé dans la vertèbre 5 et de la découpe 17 réalisée dans la lame d'essuyage 1, l'extrémité libre du moyen de verrouillage 44 venant au contact du talon 3 au fond de la découpe 17.

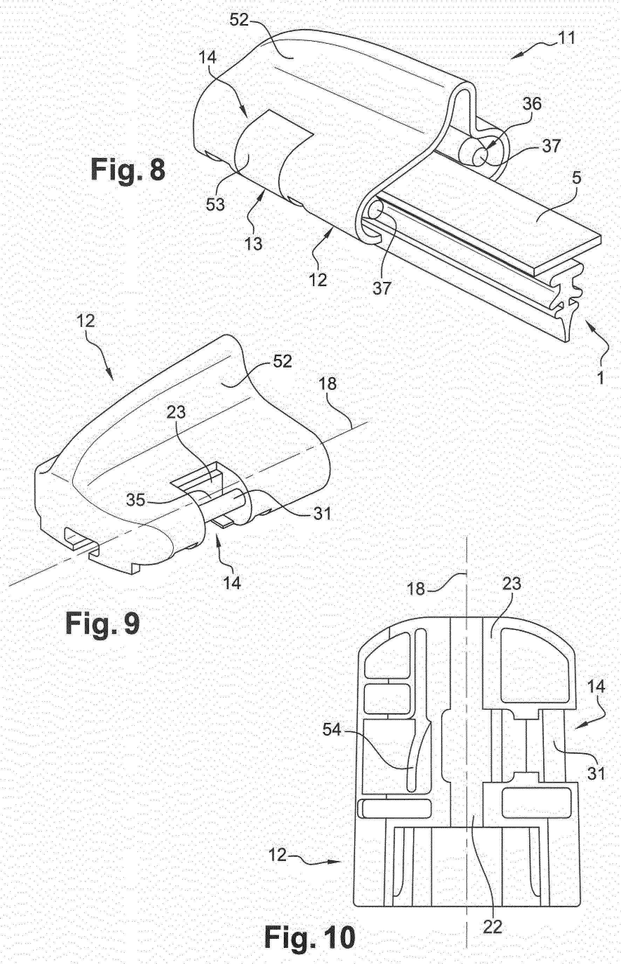

Les figures 8 à 14 montrent une deuxième variante de l'embout d'extrémité 11. La figure 8 illustre cette deuxième variante installée à l'extrémité d'un balai d'essuyage, le support étant omis.

Comme pour la première variante, la première partie 12 assure l'étanchéité du dispositif de canalisation de liquide en bouchant ce dernier au moyen des tétons 37 constitutifs du moyen d'obturation 36. En revanche, la première partie 12 se distingue de celle utilisée dans la première variante par le fait qu'elle comprend un flan 52 qui suit le profil extérieur du support du balai d'essuyage. En d'autres termes, le flan 52 est de forme conjuguée, ou complémentaire, à la forme du support, y compris celle du moyen de canalisation de liquide et/ou du déflecteur. Ce flan 52 définit ainsi une périphérie externe de la partie primaire 12 qui suit un profil, appelé second profil.

La partie primaire 12 comprend la zone 14 qui reçoit la partie secondaire 13. A la différence de la première variante, la zone 14 est bordée par le second profil de la partie primaire 13.

La partie secondaire 13 comprend également un profil formé par une paroi 53, appelé premier profil, et ce dernier est dans le prolongement du second profil. Autrement dit, quand la partie secondaire 13 est logée dans la zone 14, le profil externe de la partie primaire 12 est complété par celui de la partie secondaire 13 au droit de la zone 14. Une telle configuration permet de rendre accessible la partie secondaire pour une extraction par l'utilisateur sans nuire à l'aspect esthétique de l'embout d'extrémité 11 puisque la partie secondaire s'inscrit dans le prolongement de la partie primaire.

La figure 9 montre la partie primaire 12 de la deuxième variante de l'embout d'extrémité 11.

Cette partie primaire 12 est partagée en deux portions par l'axe longitudinal 18. On note que la partie du flan 52 qui reçoit le déflecteur formé sur le support du balai d'essuyage est décalée latéralement par rapport à l'axe longitudinal 18. Autrement dit et contrairement à la première variante, les deux portions de la partie primaire 12 ne sont pas identiques. La zone 14 est réalisée dans la portion opposée à la partie du flan 52 qui reçoit le déflecteur par rapport à l'axe longitudinal 18.

Comme pour la première variante, la zone 14 comprend un secteur tubulaire 31 dont les deux extrémités prennent naissance sur le flan 52, ce dernier recouvrant le corps 23. La lumière 35 est également formée par l'espace qui sépare le secteur tubulaire 31 et le corps 23.

La figure 10 est une vue de dessous de la partie primaire 12 selon la deuxième variante de l'embout d'extrémité. L'évidement 22 s'étend selon l'axe longitudinal 18 et la zone 14 est ménagée sur le côté du corps 23, c'est-à-dire latéralement par rapport à l'axe longitudinal 18.

A l'opposé de la zone 14 par rapport à l'évidement 22, on trouve un loquet 54 qui est agencé pour se déplacer au moment de l'introduction de la vertèbre. Cette dernière comprend alors une entaille et l'extrémité libre du loquet 54 vient prendre appui contre une tranche de la vertèbre au droit de l'entaille. Une telle disposition assure le blocage en translation de la partie primaire 12 vis-à-vis de la vertèbre.

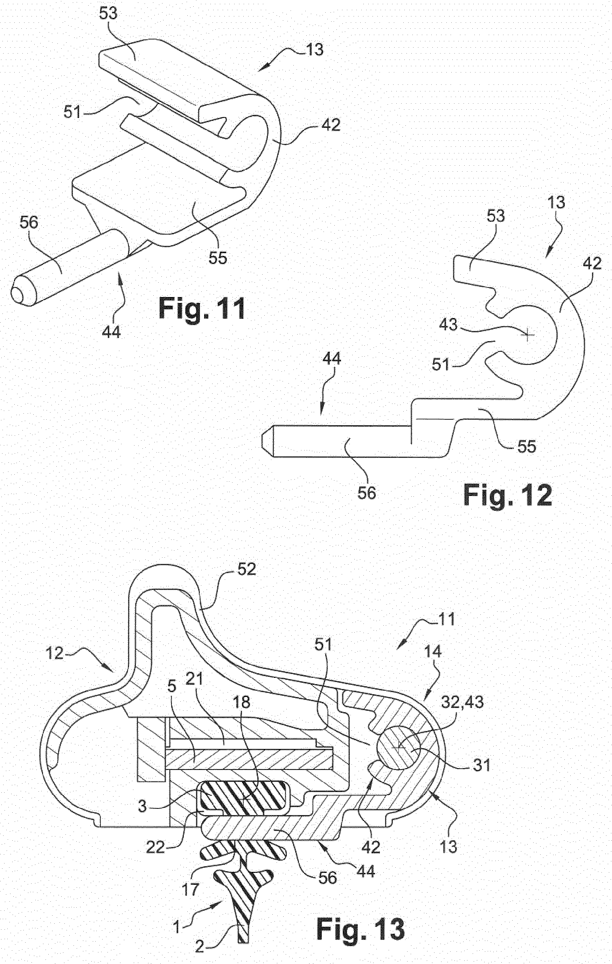

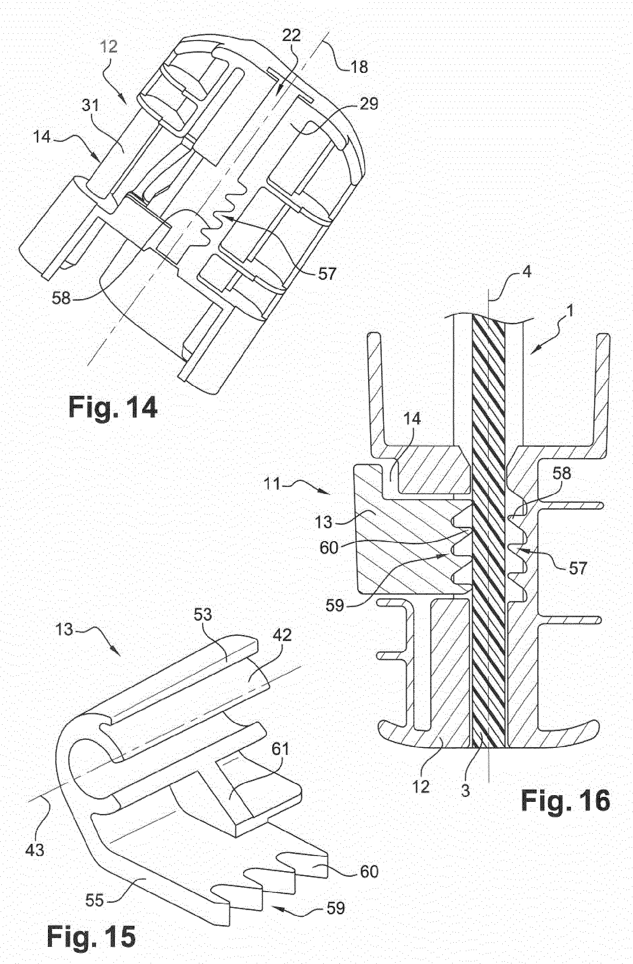

Les figures 13 et 14 illustrent en détails la partie secondaire 13 utilisée dans la deuxième variante de l'embout d'extrémité.

La paroi 53 prend naissance à la périphérie de la portion tubulaire creuse 42. Cette paroi 53 forme une aile qui s'étend à partir de la portion tubulaire creuse 42, cette dernière comprenant la fente 51 nécessaire pour autoriser l'entrée du secteur tubulaire de la partie primaire dans l'arc de cercle formé par la portion tubulaire creuse 42. A l'opposé de cette paroi 53 par rapport à la portion tubulaire creuse 42, on trouve un plateau 55 duquel est issu le moyen de verrouillage 44.

Selon cette variante, le moyen de verrouillage 44 est formé par un doigt 56 qui s'étend de manière rectiligne. Ce doigt 56 présente une section circulaire et s'étend selon une direction parallèle au plan formé par le plateau 55.

Sur la figure 13, la coupe est réalisée dans un plan orthogonal au premier axe et passant par le moyen de verrouillage 44. L'embout d'extrémité 11 y est illustré selon la deuxième variante et on constate que la partie primaire 12 comprend une unique zone 14. Le secteur tubulaire 31 s'étend selon la direction primaire parallèle à l'axe longitudinal de l'évidement 22 et dans un plan passant par une face supérieure de la vertèbre 5.

La coopération entre le secteur tubulaire 31 de la partie primaire 12 dans la portion tubulaire creuse 42 issue de la partie secondaire 13 est particulièrement visible.

La fente 51 de la portion tubulaire creuse 42 est réalisée dans le quart latéral de cette portion cylindrique, c'est-à-dire un quart qui fait face au logement 21.

Selon cette deuxième variante, la découpe 17 pratiquée dans la lame d'essuyage 1 est réalisée entre le talon 3 et la zone de frottement 2. Il s'agit ici d'un trou qui traverse de part en part la lame d'essuyage 1. Ce trou présente un diamètre intérieur équivalent au diamètre extérieur du doigt 56, ce trou étant réalisé selon un axe orthogonal au premier axe de la lame d'essuyage 1.

La figure 13 montre un mode de réalisation où la zone 14 est à l'opposé de la forme du flanc 52 qui reçoit le déflecteur par rapport à l'axe longitudinal 18. Bien évidement, l'invention couvre le cas où la zone 14 est réalisée dans la même portion de la partie primaire 12 dans laquelle le flanc 52 présente la forme recevant le déflecteur.

Les figures 14 à 16 montrent une troisième variante de l'embout d'extrémité selon l'invention.

On s'attache ci-dessous à décrire les différences par rapport à la deuxième variante et on se reportera à la description de cette dernière pour connaître la structure des éléments identiques à la deuxième variante.

Sur la figure 14, on voit la partie primaire 12 qui comprend la première tranche 29, cette dernière délimitant au moins partiellement l'évidement 22.

Dans le prolongement de la zone 14, on constate que l'évidement 22 est bordé par un dispositif d'accrochage primaire 57 formé sur la première tranche 29. Ce dispositif d'accrochage primaire 57 forme ainsi le dispositif de verrouillage en ce sens qu'il représente le moyen qui bloque la translation de la lame d'essuyage selon l'axe longitudinal 18.

Ce moyen d'accrochage primaire 57 présente une multiplicité de dents 58 destinées à venir en appui contre la lame d'essuyage, par exemple entre le talon et la zone de frottement.

La figure 15 montre la partie secondaire 13 employée dans cette troisième variante de l'embout d'extrémité.

Comme pour la partie primaire 12 décrite en rapport à la figure 14, on s'attache à décrire ci-dessous les différences avec la partie secondaire illustrée aux figures 11 et 12.

Le plateau 55 est terminé par un dispositif d'accrochage secondaire 59 qui est formé d'une pluralité de dents 60. Cette partie secondaire 13 comprend par ailleurs un renfort 61 qui forme une jambe de force installée entre le plateau 55 et la portion tubulaire creuse 42. Comme le blocage de la lame d'essuyage dépend de l'appui réalisé par le dispositif d'accrochage secondaire 59, un tel renfort garantit l'absence de déformation du plateau 55 par rapport à la portion tubulaire creuse 42.

La figure 16 est une coupe de l'embout d'extrémité 11 montée sur une lame d'essuyage 1 réalisée dans un plan immédiatement en dessous des dispositifs d'accrochage primaire et secondaire. On constate que l'insertion de la partie secondaire 13 dans la zone 14 engendre une mise en appui de la lame d'essuyage 1 à la fois contre le dispositif d'accrochage primaire 57 et contre le dispositif d'accrochage secondaire 59. La lame d'essuyage 1 est alors pincée entre ces deux dispositifs au moyen des dents 58 et 60 qui pénètrent dans la lame d'essuyage 1.

La matière plastique de ces dents est plus dure que la matière constitutive de la lame d'essuyage 1 et cette dernière se déforme donc sous la pression de dents 58 et 60.

Une telle pression intervient quand la partie secondaire 13 est montée dans la zone 14. En effet, la force nécessaire pour faire entrer les dents 58 et 60 dans la lame d'essuyage 1 résulte de la coopération entre le secteur tubulaire 31 de la partie primaire 12 avec la portion tubulaire creuse 42 de la partie secondaire 13.

Le remplacement d'une lame d'essuyage d'un balai d'essuyage comprenant au moins un embout d'extrémité selon la première variante illustrée aux figures 1 à 7 intervient de la manière suivante :
- Extraction de la partie secondaire par rapport à la partie primaire par une traction sur la partie secondaire dans une direction perpendiculaire au plan qui passe par la paroi supérieure de la partie primaire,
- Retrait par un mouvement de translation de la lame d'essuyage à remplacer, la partie primaire restant solidaire du balai d'essuyage,
- Insertion d'une nouvelle lame d'essuyage par un mouvement de translation en l'enfilant dans l'évidement de la partie primaire,
- Alignement de la lame d'essuyage sur une extrémité de la partie primaire,
- Montage de la partie secondaire sur la partie primaire au moyen d'un clippage mis en oeuvre par une coopération entre au moins un secteur tubulaire et une portion tubulaire creuse.

En ce qui concerne la deuxième et la troisième variante, le changement de la lame d'essuyage est réalisé par un remplacement de la première étape par l'étape suivante :
- Extraction de la partie secondaire par rapport à la partie primaire par une traction sur la partie secondaire dans une direction parallèle à un plan qui passe par le logement et la direction primaire qui définit le centre du secteur tubulaire. Les autres étapes sont identiques.

## Revendications

1. Embout d'extrémité (11) de balai d'essuyage comportant au moins une lame d'essuyage (1), s'étendant selon un premier axe (4), au moins un dispositif de canalisation d'un liquide (7) et une vertèbre (5), l'embout d'extrémité (11) comprenant
- une partie primaire (12) comprenant un évidement (22) apte à recevoir la lame d'essuyage (1) et qui s'étend selon un axe longitudinal (18), au moins un moyen d'obturation (36) apte à boucher le dispositif de canalisation (7),
- une partie secondaire (13) comprenant un moyen de verrouillage (44) apte à bloquer la lame d'essuyage (1) par rapport à la partie primaire (12), **caractérisé en ce que** la partie primaire et la partie secondaire étant reliées mécaniquement l'une à l'autre de manière amovible,
ladite partie primaire (12) comprenant en outre une zone (14) ménagée latéralement par rapport à l'axe longitudinal (18) selon lequel s'étend l'évidement (22) et parallèle au premier axe (4), et apte à recevoir la partie secondaire (13) de l'embout d'extrémité (11), ladite zone (14) comprenant un secteur tubulaire (31)
et ladite partie secondaire (13) comprenant en outre un moyen de fixation apte à relier mécaniquement ladite partie secondaire (13) à la zone (14) de la partie primaire (12), le moyen de fixation étant au moins une portion tubulaire creuse (42) dont la périphérie comporte une fente (51).

2. Embout d'extrémité selon la revendication 1, dans laquelle le secteur tubulaire (31) s'étend selon une direction primaire (32) parallèle à l'axe longitudinal (18).

3. Embout d'extrémité selon l'une quelconque des revendications précédentes, dans laquelle le secteur tubulaire (31) présente une section cylindrique.

4. Embout d'extrémité selon l'une quelconque des revendications précédentes, ladite partie primaire (12) comprenant un corps (23) dans lequel est ménagé l'évidement (22) et présentant une lumière (35) entre le corps (23) et le secteur tubulaire (31).

5. Embout d'extrémité selon l'une quelconque des revendications précédentes, dans laquelle l'évidement (22) est bordé par un dispositif d'accrochage primaire (57) apte à prendre appui contre la lame d'essuyage (1).

6. Embout d'extrémité selon l'une quelconque des revendications précédentesdans lequel la portion tubulaire creuse (42) s'étend selon une direction secondaire (43) et en ce que la fente (51) est rectiligne le long de la portion tubulaire creuse (42).

7. Embout d'extrémité selon l'une quelconque des revendications précédentes, dans lequel est prévu une paroi (38, 53) qui prend naissance sur au moins la portion tubulaire creuse (42).

8. Embout d'extrémité selon la revendication 7, dans laquelle la paroi (38) relie deux portions tubulaires creuses (42) délimitant ainsi un volume interne (41), le moyen de verrouillage (44) étant formé par une excroissance (45) qui s'étend dans ledit volume interne (41).

9. Embout d'extrémité selon l'une quelconque des revendications 1 à 7, dans laquelle le moyen de verrouillage (44) est formé par un doigt (56) agencé pour traverser la lame d'essuyage (1).

10. Embout d'extrémité selon l'une quelconque des revendications 1 à 7, dans laquelle le moyen de verrouillage (44) est formé par un dispositif d'accrochage secondaire (59) apte à prendre appui contre la lame d'essuyage (1).

11. Embout d'extrémité selon l'une quelconque des revendications 6, 7, 9 ou 10, dans lequel la partie secondaire (13) comprend une paroi (53) qui prend naissance sur au moins la portion tubulaire creuse (42) et forme un premier profil, la partie primaire (12) comprend un flan (52) qui définit une périphérie externe de la partie primaire (12) et forme un second profil, et dans lequel le premier profil est au moins partiellement identique au second profil.

12. Balai d'essuyage comprenant au moins une lame d'essuyage (1), au moins un dispositif de canalisation d'un liquide (7) et une vertèbre (5) et un embout d'extrémité (11) selon l'une quelconque des revendications précédentes.

## Patentansprüche

1. Endkappe (11) eines Wischerblatts, das mindestens einen Wischergummi (1), der sich gemäß einer ersten Achse (4) erstreckt, mindestens eine Leitungsvorrichtung einer Flüssigkeit (7) und eine Rückenverstärkung (5) aufweist, wobei die Endkappe (11) enthält
- einen Primärteil (12), der eine Aussparung (22) enthält, die den Wischergummi (1) aufnehmen kann und sich gemäß einer Längsachse (18) erstreckt, mindestens eine Verschlusseinrichtung (36), die die Leitungsvorrichtung (7) verschließen kann,
- einen Sekundärteil (13), der eine Verriegelungseinrichtung (44) enthält, die den Wischergummi (1) bezüglich des Primärteils (12) blockieren kann,
**dadurch gekennzeichnet, dass** wobei der Primärteil und der Sekundärteil mechanisch lösbar miteinander verbunden sind,
wobei der Primärteil (12) außerdem eine Zone (14) enthält, die seitlich bezüglich der Längsachse (18), gemäß der sich die Aussparung (22) erstreckt, und parallel zur ersten Achse (4) angeordnet und fähig ist, den Sekundärteil (13) der Endkappe (11) aufzunehmen, wobei die Zone (14) einen rohrförmigen Bereich (31) enthält,
und wobei der Sekundärteil (13) außerdem eine Befestigungseinrichtung enthält, die den Sekundärteil (13) mechanisch mit der Zone (14) des Primärteils (12) verbinden kann, wobei die Befestigungseinrichtung mindestens ein hohles rohrförmiges Teilstück (42) ist, dessen Umfang einen Schlitz (51) aufweist.

2. Endkappe nach Anspruch 1, wobei der rohrförmige Bereich (31) sich gemäß einer Primärrichtung (32) parallel zur Längsachse (18) erstreckt.

3. Endkappe nach einem der vorhergehenden Ansprüche, wobei der rohrförmige Bereich (31) einen zylindrischen Querschnitt hat.

4. Endkappe nach einem der vorhergehenden Ansprüche, wobei der Primärteil (12) einen Körper (23) enthält, in dem die Aussparung (22) ausgespart ist, und ein Langloch (35) zwischen dem Körper (23) und dem rohrförmigen Bereich (31) aufweist.

5. Endkappe nach einem der vorhergehenden Ansprüche, wobei die Aussparung (22) von einer Primärbefestigungsvorrichtung (57) umrandet wird, die gegen den Wischergummi (1) anliegen kann.

6. Endkappe nach einem der vorhergehenden Ansprüche, wobei das hohle rohrförmige Teilstück (42) sich gemäß einer Sekundärrichtung (43) erstreckt und dass der Schlitz (51) entlang des hohlen rohrförmigen Teilstücks (42) geradlinig ist.

7. Endkappe nach einem der vorhergehenden Ansprüche, wobei eine Wand (38, 53) vorgesehen ist, die mindestens am hohlen rohrförmigen Teilstück (42) beginnt.

8. Endkappe nach Anspruch 7, wobei die Wand (38) zwei hohle rohrförmige Teilstücke (42) verbindet, wodurch ein Innenvolumen (41) begrenzt wird, wobei die Verriegelungsvorrichtung (44) von einem Fortsatz (45) gebildet wird, der sich in das Innenvolumen (41) erstreckt.

9. Endkappe nach einem der Ansprüche 1 bis 7, wobei die Verriegelungseinrichtung (44) von einem Finger (56) gebildet wird, der angeordnet ist, um den Wischergummi (1) zu durchqueren.

10. Endkappe nach einem der Ansprüche 1 bis 7, wobei die Verriegelungseinrichtung (44) von einer Sekundärbefestigungsvorrichtung (59) gebildet wird, die gegen den Wischergummi (1) anliegen kann.

11. Endkappe nach einem der Ansprüche 6, 7, 9 oder 10, wobei der Sekundärteil (13) eine Wand (53) enthält, die auf mindestens dem hohlen rohrförmigen Teilstück (42) beginnt und ein erstes Profil bildet, der Primärteil (12) einen Abschnitt (52) enthält, der einen Außenumfang des Primärteils (12) definiert und ein zweites Profil bildet, und wobei das erste Profil zumindest teilweise gleich dem zweiten Profil ist.

12. Wischerblatt, das mindestens einen Wischergummi (1), mindestens eine Leitungsvorrichtung einer Flüssigkeit (7) und eine Rückenverstärkung (5) und eine Endkappe (11) nach einem der vorhergehenden Ansprüche enthält.

## Claims

1. End fitting (11) of a wiper having at least one wiper blade (1), extending along a first axis (4), at least one liquid channeling device (7) and a vertebra (5), the end fitting (11) comprising
- a primary part (12) comprising a recess (22) that is able to receive the wiper blade (1) and which extends along a longitudinal axis (18), at least one blocking means (36) that is able to plug the channeling device (7),
- a secondary part (13) comprising a locking means (44) able to immobilize the wiper blade (1) with respect to the primary part (12), **characterized in that**,
the primary part and the secondary part being mechanically connected together in a removable manner,
- said primary part (12) furthermore comprising a zone (14) formed laterally with respect to the longitudinal axis (18) along which the recess (22) extends and parallel to the first axis (4), and able to receive the secondary part (13) of the end fitting (11), said zone (14) comprising a tubular sector (31),
and said secondary part (13) furthermore comprising a fastening means that is able to mechanically connect said secondary part (13) to the zone (14) of the primary part (12), the fastening means being at least one hollow tubular portion (42), the periphery of which has a slot (51).

2. End fitting according to Claim 1, wherein the tubular sector (31) extends in a primary direction (32) parallel to the longitudinal axis (18).

3. End fitting according to either one of the preceding claims, wherein the tubular sector (31) has a cylindrical section.

4. End fitting according to any one of the preceding claims, said primary part (12) comprising a body (23) in which the recess (22) is formed and having an aperture (35) between the body (23) and the tubular sector (31).

5. End fitting according to any one of the preceding claims, wherein the recess (22) is bordered by a primary coupling device (57) that is able to bear against the wiper blade (1).

6. End fitting according to any one of the preceding claims, wherein the hollow tubular portion (42) extends in a secondary direction (43) and in that the slot (51) is rectilinear along the hollow tubular portion (42).

7. End fitting according to any one of the preceding claims, wherein a wall (38, 53) which originates on at least the hollow tubular portion (42) is provided.

8. End fitting according to Claim 7, wherein the wall (38) connects two hollow tubular portions (42), thereby delimiting an internal volume (41), the locking means (44) being formed by a protuberance (45) which extends into said internal volume (41).

9. End fitting according to any one of Claims 1 to 7, wherein the locking means (44) is formed by a finger (56) designed to pass through the wiper blade (1).

10. End fitting according to any one of Claims 1 to 7, wherein the locking means (44) is formed by a secondary coupling device (59) that is able to bear against the wiper blade (1).

11. End fitting according to any one of Claims 6, 7, 9 or 10, wherein the secondary part (13) comprises a wall (53) which originates on at least the hollow tubular portion (42) and forms a first profile, the primary part (12) comprises a flank (52) which defines an outer periphery of the primary part (12) and forms a second profile, and wherein the first profile is at least partially identical to the second profile.

12. Wiper comprising at least one wiper blade (1), at least one liquid channeling device (7) and a vertebra (5) and an end fitting (11) according to any one of the preceding claims.
